# EUROPEAN PATENT SPECIFICATION

(11) **EP 2 426 430 B1**
(45) Date of publication and mention of the grant of the patent: **12.06.2019**
(21) Application number: 11250750.4
(22) Date of filing: 31.08.2011
(51) Int. Cl.: F24S 20/67, F24S 25/613

(54) **Method of installing a solar energy collection device and flashing element**
Verfahren zur Installierung einer Sonnenenergiekollektorvorrichtung und Verwahrungselement
Méthod d'installation d'un dispositif de collecte d'énergie solaire et élément de protection

(30) Priority: 01.09.2010 GB 201014499
(43) Date of publication of application: 07.03.2012
(73) Proprietor: Solar Century Holdings Limited, Waterloo London SE1 7AB (GB)
(72) Inventor: Kimberley, Malcolm John, London SE3 0PE (GB)
(74) Representative: Atkinson, Ralph

(56) References cited:
- EP-A1- 0 933 485
- EP-A1- 0 962 606
- EP-A1- 2 192 248
- EP-A2- 2 026 017
- WO-A2-2010/111383
- GB-A- 2 454 368

## Description

### BACKROUND OF THE INVENTION

### 1. Field of the Invention

The present invention relates to a method of installing a solar energy collection device as part of a roof and a flashing element for use when installing a solar energy collection device.

### 2. Description of the Related Art

Roofs are known which include several solar energy collection devices in combination with slates mounted on battens or sarking. An example of such a roof is disclosed in European Patent application published as EP 2 026 017 A2. The disclosed roof includes a connection element for providing a connection between a solar energy collection device and a neighbouring slate positioned at the side of the collection device. This system requires the collection devices and the slates to have corresponding dimensions and consequently the roofs to which this system may be applied is restricted.

GB 2 4454 368 A discloses a method of providing a seal between a frame of panels with photovoltaic cells, or of solar heating panels, and the adjacent tiles of a roof. The method makes use of a sealing element made of a deformable material and comprising first and second drainage grooves. The second drainage groove is delimited on one side by a flange that is intended to be covered by the adjacent roofing tiles.

### BRIEF SUMMARY OF THE INVENTION

According to a first aspect of the present invention, there is provided a method of installing a solar energy collection device as part of a roof as claimed in claim 1.

According to a second aspect of the present invention, there is provided a flashing element as claimed in claim 8.

Preferably, the flashing elements are each is formed of a plastics material. Preferably each said flashing element has three grooves to allow folding. In a preferred embodiment the grooves are arranged parallel to each other and the spacing between neighbouring grooves is between 3 and 7 millimetres, so that the flashing element is useable with slates having conventional thicknesses. Preferably said flashing elements have at least one protrusion for locating against edges of edge roofing elements, and in an embodiment in which said at least one protrusion defines a line it is preferable for said flashing elements to have an upstanding ridge arranged substantially parallel to said line. Preferably said plastics material is suitable for outdoor roofing applications.

### BRIEF DESCRIPTION OF THE SEVERAL VIEWS OF THE DRAWINGS

*Figure 1* shows a building **101** having a roof **102** embodying the present invention;
*Figure 2* shows the collection device **109** previously shown in *Figure 1*;
*Figure 3* shows the collection device **107** along with its neighbouring collection devices **105** and **109** arranged in an overlapping manner;
*Figure 4* shows the roof **102** previously shown in *Figure 1* before installation of the collection devices;
Figures 5, 6 and 7 show a flashing element **501** (or soak tray) in a perspective view, a plan view and a front view respectively;
*Figures 8* and *9* show enlarged views of portions of the flashing element **501,** indicated respectively at **701** and **702** *Figure 7**;*
*Figures 10* and *11* respectively show a perspective view and a front view of the flashing element **501** after having been folded about its grooves **509, 510** and **511;**
*Figure 12* shows an enlarged partial view of a portion of the flashing element **501** indicated by circle **1101** in *Figure 11*;
*Figure 13* shows the partial roof assembly previously shown in *Figure 4* after installation of a first flashing element **501;**
*Figure 14* shows the partial roof assembly of *Figure 13* after a further three flashing elements **501A, 501B,** and **501C** have been installed;
*Figure 15* shows the arrangement of flashing elements between roofing elements;
*Figure 16* shows a portion of the roof **102** including roofing elements **103A, 103B** and **103C** along with flashing elements **501, 501A** and **501B;**
*Figure 17A* shows a hooking member **1701** for restraining a front edge of a lowermost collection device in an array;

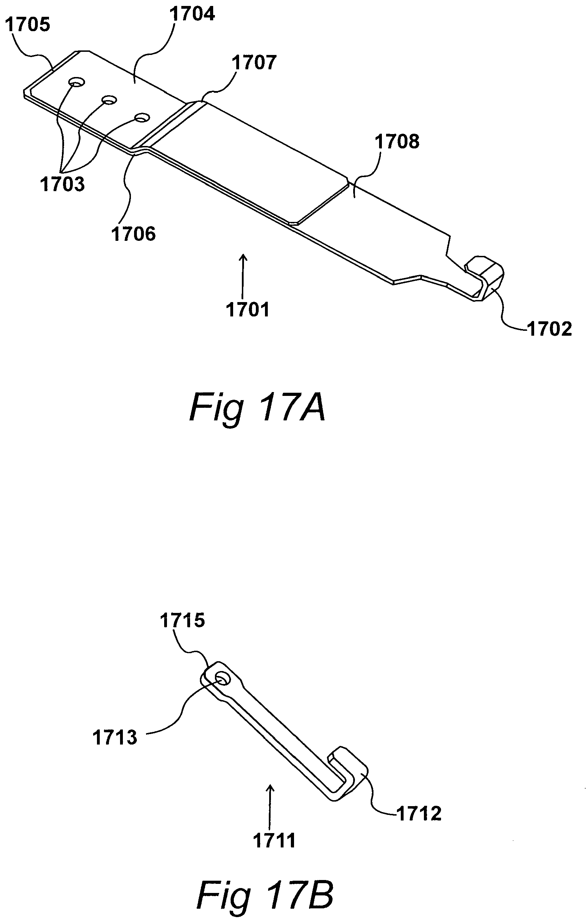

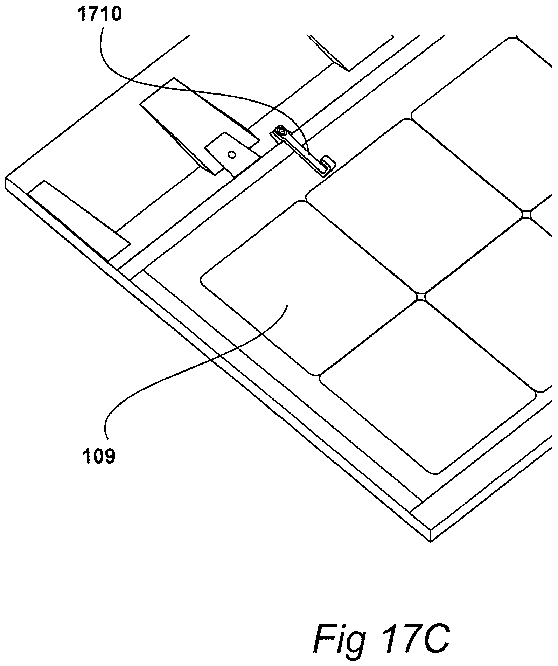

*Figure 17*B shows a hook **1711** for restraining the front edge of collection devices in an array;
*Figure 17*C shows the hook **1711** attached to a collection device **109;**

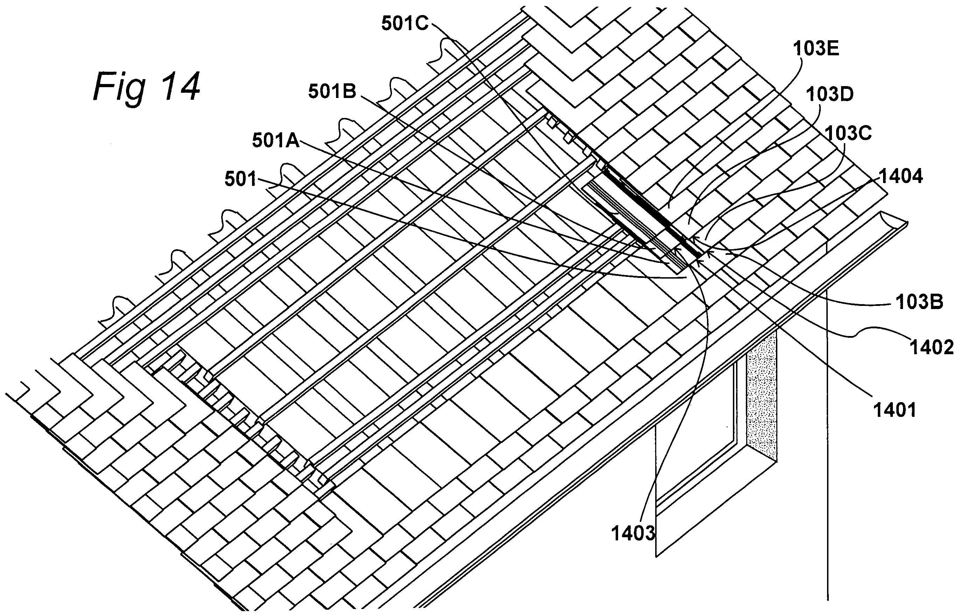

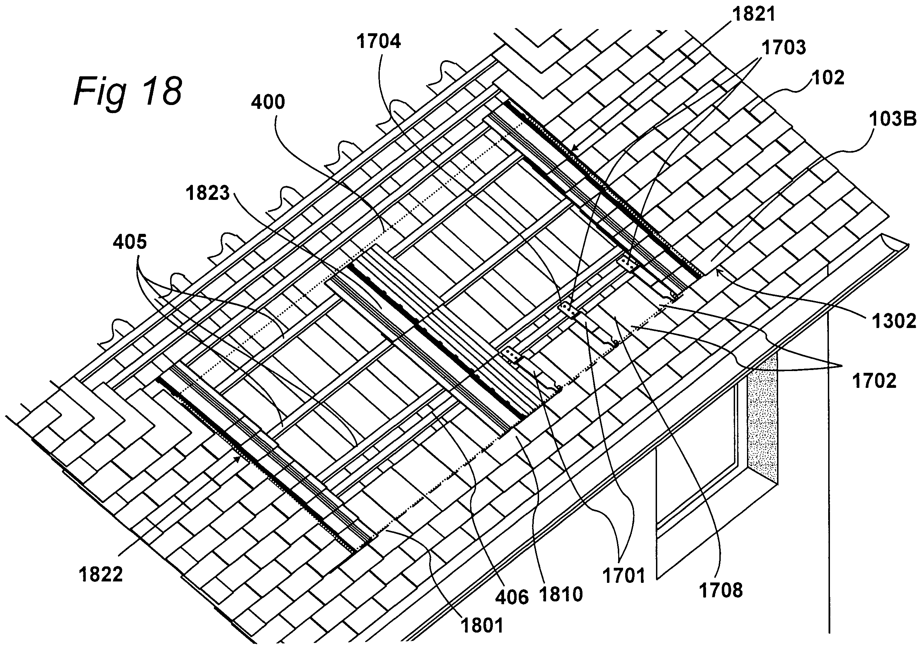

*Figure 18* shows the partially formed roof **102** previously shown in *Figure 14**,* with three hooking members **1701** attached to the additional batten **406;**

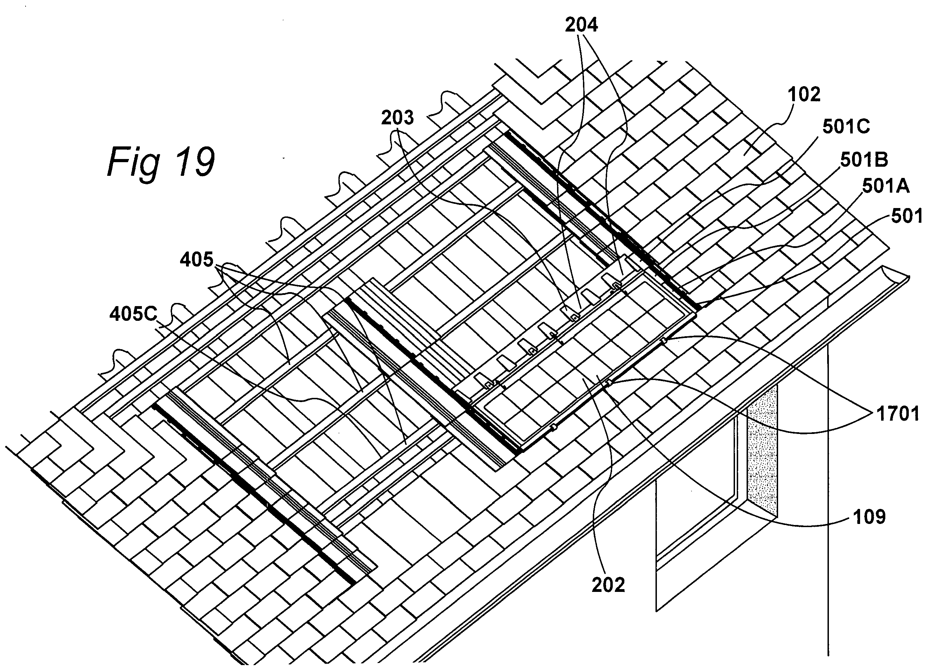

*Figure 19* shows a first one **(109)** of the collection devices installed as part of the roof **102;**

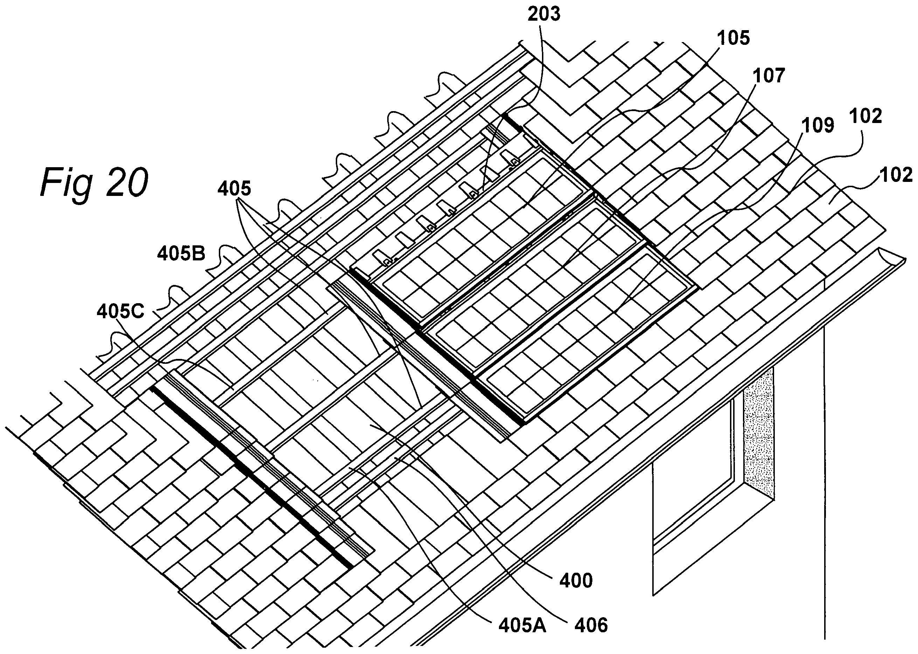

*Figure 20* shows the roof **102**, partially complete, after installation of collection elements **109**, **107** and **105**;

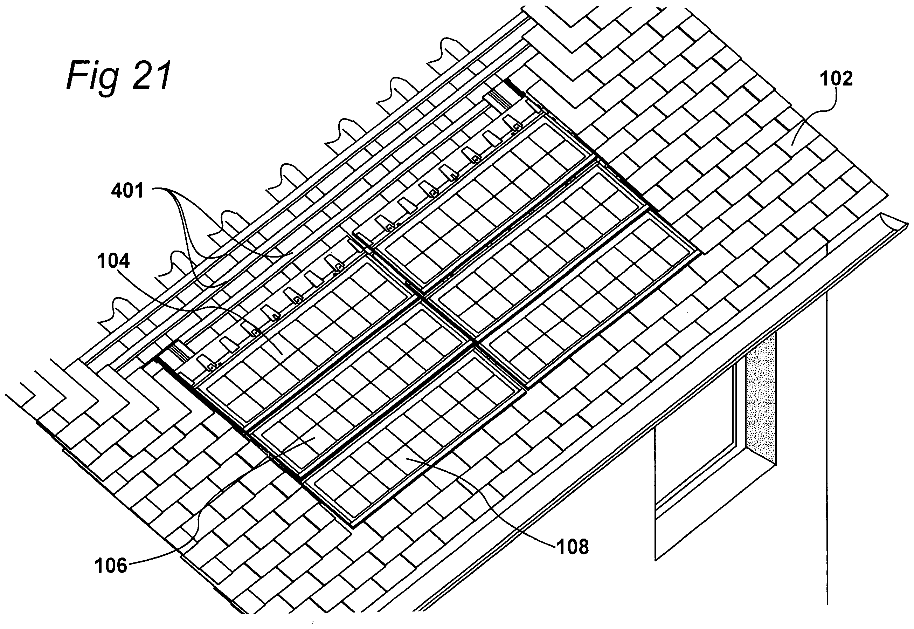

*Figure 21* shows the roof **102** after installation of the second column of collection devices, comprising collection devices **108, 106** and **104;**

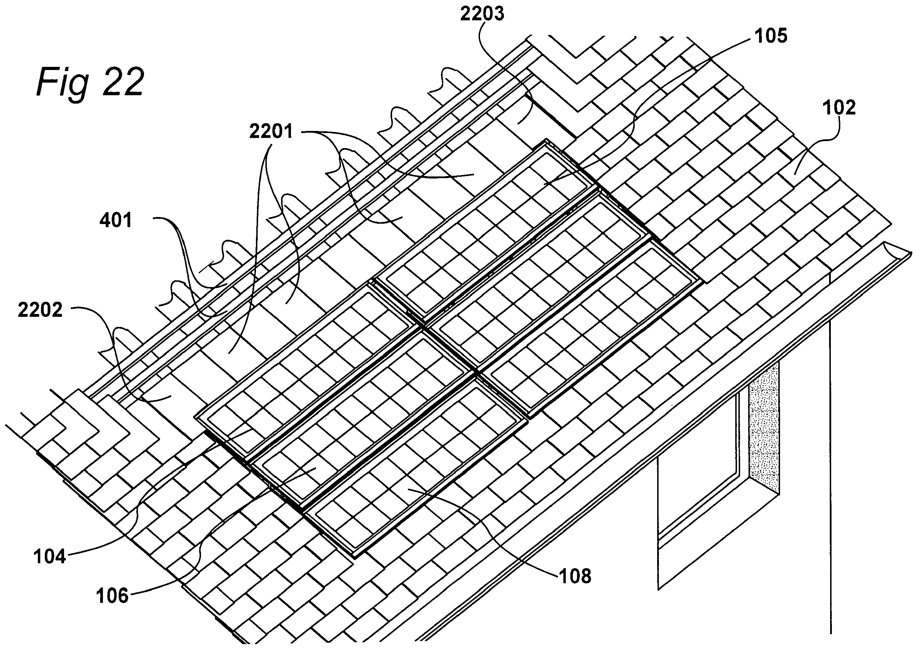

*Figure 22* shows the roof **102** after a first row **2201** of slates has been fitted across the upper edge of the array of collection devices;

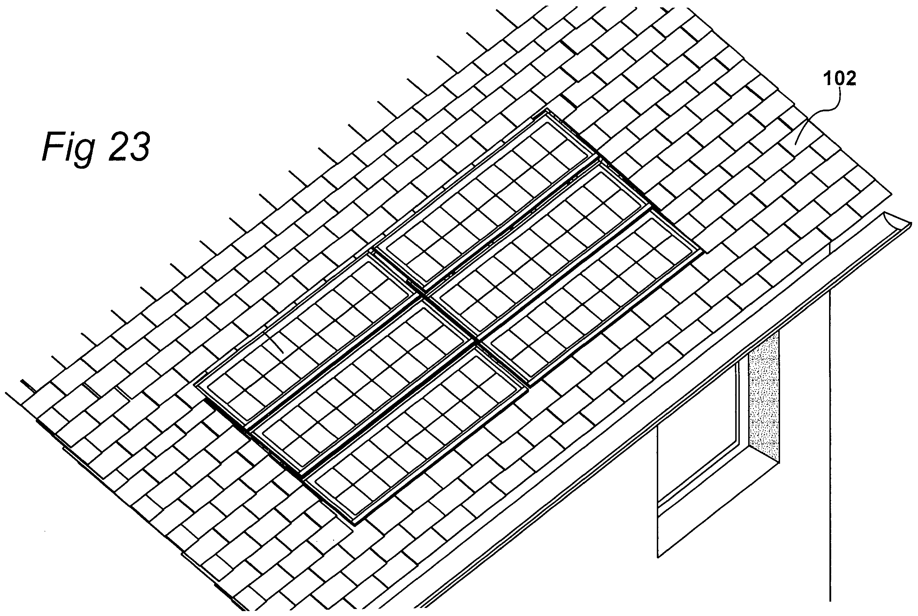

*Figure 23* shows the completed roof **102** after installation of the second column of collection devices, and final roofing element; and

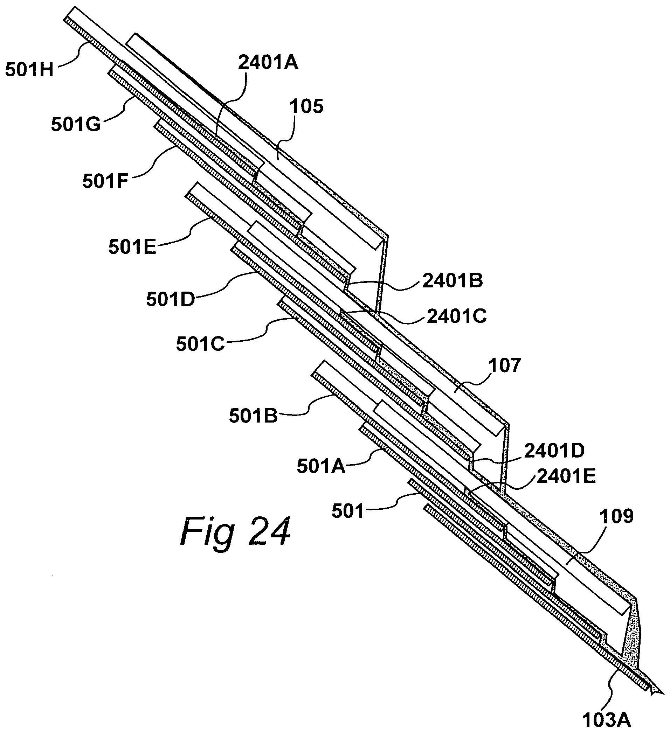

*Figure 24* shows a schematic diagram representing a portion of the roof **102,** comprising the flashing elements **501** and **501A** to **501H**, along with collection devices **105, 107** and **109.**

### DETAILED DESCRIPTION OF THE PREFERRED EMBODIMENTS

### Figure 1

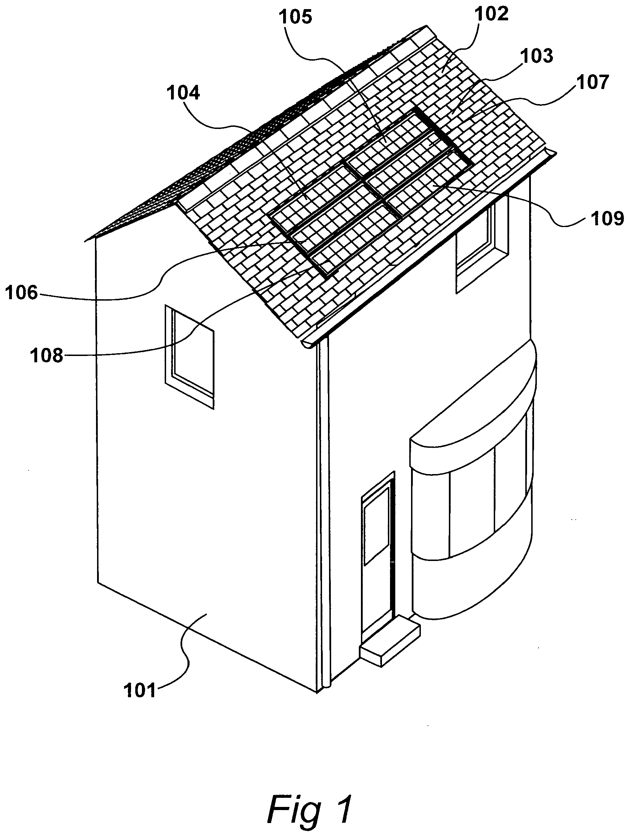

A building **101** having a roof **102** embodying the present invention is shown in *Figure 1*. In the present example, the building **101** is a house having a slate roof, and so it comprises a plurality of slates arranged and mounted using conventional techniques. It should be noted that, although the roofing elements, such as element **103,** are formed of slate in the present example, in alternative roofs embodying the present invention, the roof is formed of other types of roofing elements such as fibre cement slates, artificial or reconstituted slates, plain natural slates, interlocking tiles, etc.

The roof **102** also comprises an array of, in this example six, solar energy collection devices **104, 105, 106, 107, 108** and **109** for converting solar energy to another form of energy. In this example, the collection devices **104** to **109** are photovoltaic devices.

In the present example, the collection devices **109** are arranged in two columns, each column having three collection devices. Thus the three collection devices **104, 106** and **108** form a left column, and collection devices **105, 107** and **109** form a right column. As will be described in further detail below, the collection devices in each column are arranged in an overlapping manner, and in the present example, they extend down the roof **102** by a distance that is approximately three and a half times the length of one of the roofing elements, such as roofing element **103.** Thus, in accordance with the present invention, there is not a specific relationship between the length by which a collection device extends down the roof and the length by which a roofing element extends down the roof.

It may also be noted that the collection devices have a width that is slightly less than six of the roofing element widths in the present example. However, it will be understood from further reading of this specification that the system of mounting the collection devices does not restrict the width of the collection device that is used with this particular width of roofing element, or alternatively, it does not restrict the roofing element that is used with this type of collection device.

### Figure 2

The collection devices **104** to **109** shown in *Figure 1* are substantially identical to each other and consequently the following description of collection device **109** applies to the other collection devices.

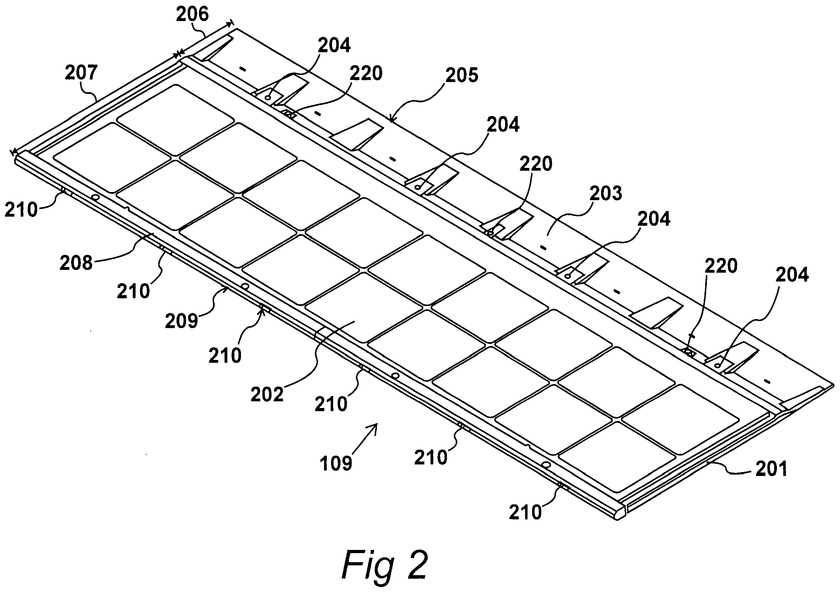

The collection device **109** is shown in *Figure 2**.* The collection device **109** comprises a frame **201** supporting a collection portion **202** configured to receive solar energy and convert it to electrical energy. The frame **201** includes an attachment portion **203** having a plurality, in this example four holes, **204** for receiving screws to attach the collection device **109** to battens forming part of a roof, such as roof **102.**

The attachment portion **203** extends from a back edge **205** of the collection device **109** by a length indicated by arrow **206** in *Figure 2**.* The collection portion **202** extends forward from the attachment portion by a second length indicated by arrow **207** in *Figure 2**.* A front rail **208** extends across the width of the collection device **109** and forms its front edge **209.** A plurality of slots **210,** in this case six, is formed in the rail **208** on the front edge **209** to allow drainage of rainwater from the frame of the collection device.

When mounting the collection devices, such as collection device **109,** to form part of a roof, the collection devices are arranged in an overlapping configuration such that a portion of a collection device adjacent to its front edge **209** resides above the attachment portion **203.** In this way, the area of the roof taken up by the collection devices is made weather-tight.

The front edge **209** of the collection devices is restrained by means of a plurality of hooks or hooking members as will be described further below. Consequently, the attachment portion **203** defines three holes **220** for receiving a screw to allow a respective hook to be attached.

### Figure 3

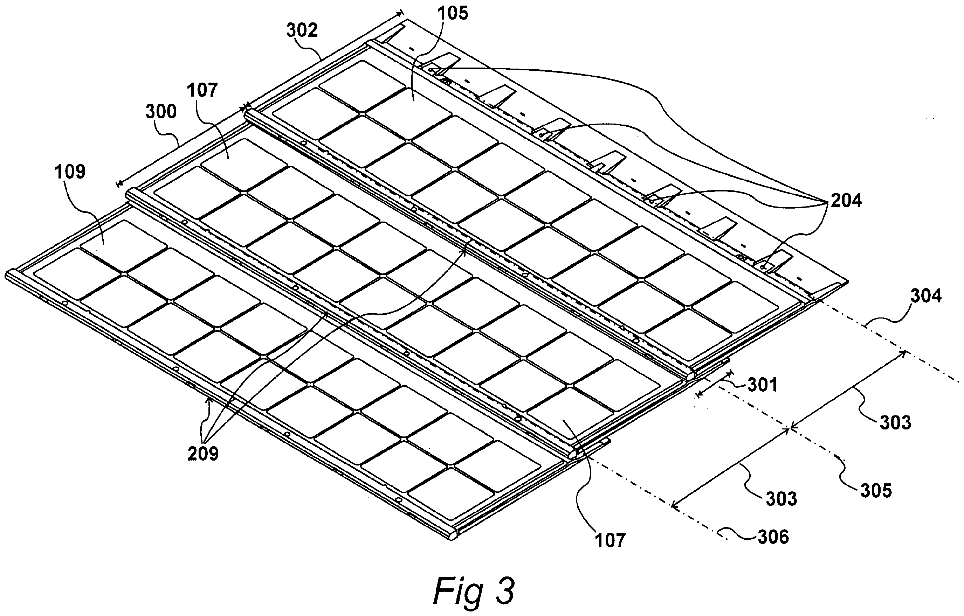

The collection device **107** is shown along with its neighbouring collection devices **105** and **109** arranged in the aforementioned overlapping manner in *Figure 3**.* When arranged in this manner, the front edges **209** of the collection devices **105, 107** and **109** are equally spaced apart by a distance (indicated by arrow **300**). This distance **(300)** is calculated by subtracting the distance by which the collection devices overlap (indicated by arrow **301** in *Figure 3*) from the overall width, indicated by arrow **302.** It will be apparent that the line of attachment holes **204** for one collection device is separated from the line of attachment holes of the neighbouring collection device by the same distance. (Thus arrows **303** have the same length as arrow **300**.)

In *Figure 3*, the attachment holes **204** of collection device **105** lay on a first line **304,** the attachment holes of the second collection device **107** lay on a line **305** and the attachment holes of the third collection device **109** lay on a third line **306.** As will now be understood, the distance between each of these three lines **304, 305** and **306** are spaced apart by a distance equal to the width **(302)** of the collection devices minus the overlapping distance **(301).** Consequently, when the collection devices are to be mounted as part of a roof they are mounted on battens that are equally spaced by this same distance. This is therefore a distance that is determined from the dimensions of the collection devices themselves, rather than the dimensions of the surrounding roofing elements.

### Figure 4

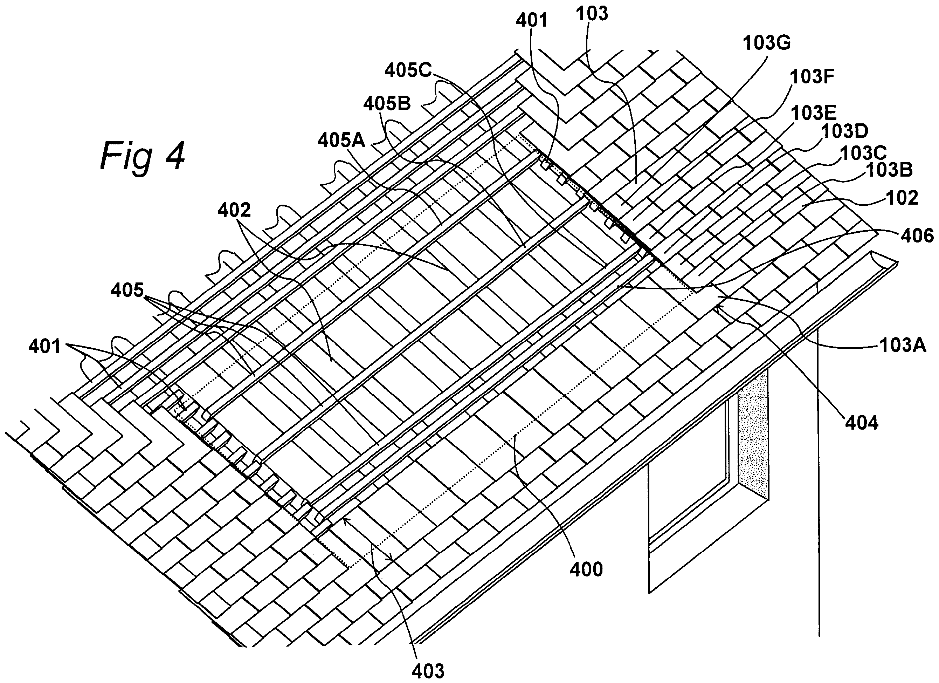

The roof **102** previously shown in *Figure 1* is shown in *Figure 4* before installation of the collection devices.

As mentioned previously, the roofing elements, such as roofing element **109,** are mounted on battens **401,** which themselves are mounted on rafters **402** in a conventional manner. The roofing elements, such as **103,** have a length, indicated by arrow **403** in *Figure 4**,* extending down the roof. The roofing elements are arranged in rows in which their bottom edges, such as bottom edge **404** of roofing element **103A** are spaced apart from the bottom edges of adjacent rows by a fixed distance. In the present case, this distance is a third of the length **(403)** of the roofing elements. The battens **401** to which the roofing elements are attached are also equally spaced by this same distance. Thus, the battens **401** to which the roofing elements, such as 103, are attached are spaced apart by a distance determined from the length of the roofing elements.

A region of the roof in which the collection devices are to be mounted is identified by a dotted line **400** in *Figure 4**.* The region of the roof **102** in which the collection devices are to be mounted is left free of the battens **401.** Instead of the first battens **401,** a second set of battens **405,** onto which the collection devices are to be mounted, have been attached to the rafters **402.** This second set of battens **405** comprises of battens that have been equally spaced by the dimension determined from the collection devices as discussed above with reference to *Figure 3**.* In the present example, the array of collection devices comprises of three rows of collection devices and consequently, the second set of battens **405** comprises a respective three battens **405A, 405B, 405C.**

As may be seen in *Figure 4**,* an additional batten **406** is also mounted to the rafters **402** alongside but spaced apart from batten **405C** such that batten **406** resides below batten **405C**. As will be described further below, the additional batten **406** is provided in the present embodiment to allow attachment of hooking members used to secure the bottom edge of the lowermost collection devices **108** and **109.**

When the collection devices are installed as part of the roof **102,** it is required that the roof as a whole is weather-tight such that rain falling on the roof **102** cannot leak down into the roof space and building below. Consequently, it is important to provide a means of preventing water leaking between the collection devices and the edges of adjacent roofing elements. As may be seen in *Figure 4**,* the roofing elements that are arranged to be adjacent to the collection devices, down the sides of the collection devices, have edges that form a line extending down the roof. For example, roofing elements **103B, 103C**, **103D**, **103E, 103F**, and **103G** have edges that are substantially aligned to define a line extending down the roof. In order to prevent water leaking between the edges of the edge roofing elements and the adjacent collection devices, such as **107** and **109.** The roof **102** also comprises flashing elements as will now be described below.

In the present example, the collection devices are fitted to the roof of a new building during the process of fitting the slates. However, it should be understood that the collection devices might also be retrofitted to an existing roof. To do this a region of the roof is identified as the region in which collection devices are to be located. Slates are removed from this region of the roof to expose the existing battens. The existing battens within this region are then cut and the appropriate sections of battens are removed. A new set of battens, spaced to receive the collection devices, are then attached to the rafters. The collection devices are then fitted, as will be described below.

### Figures 5, 6, 7, 8 & 9

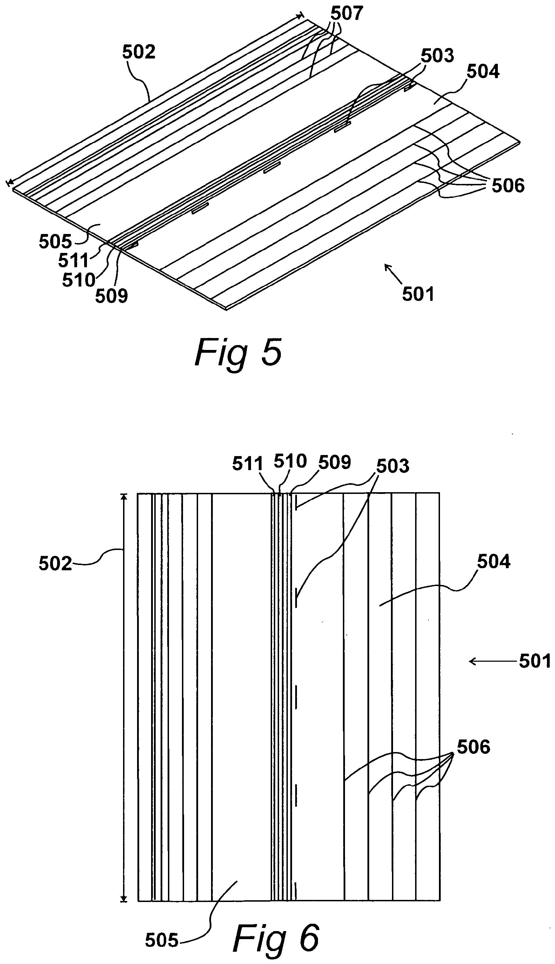

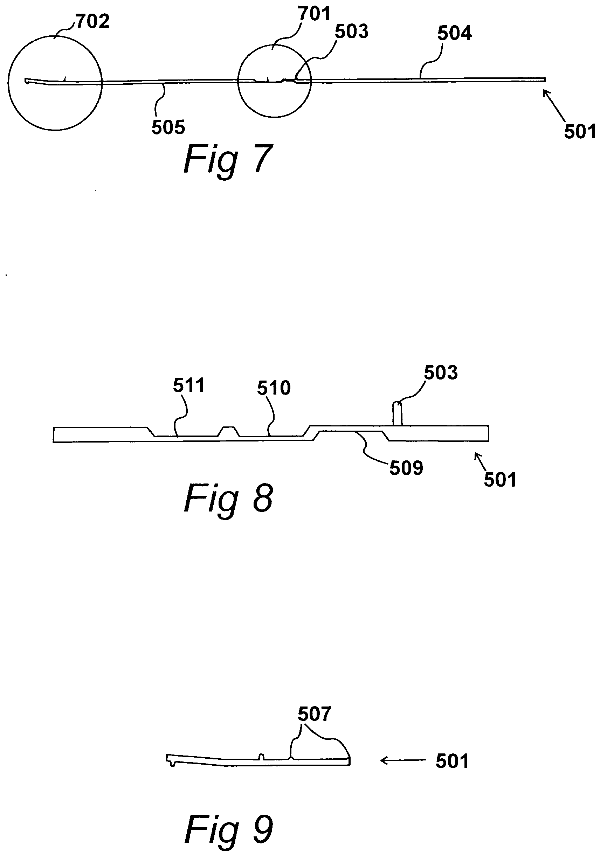

A flashing element, also known as a soak tray, is shown in the perspective view of *Figure 5*, the plan view of *Figure* 6 and the front view of *Figure 7*. Portions of the end view of *Figure 7*, indicated at **701** and **702** are shown in the enlarged partial front views of *Figures 8* and *9* respectively.

The flashing element **501** has a generally rectangular shape having a length **502** chosen such that the flashing element is suitable for use with various lengths of roofing element up to and including the longest roofing elements available. To achieve this generalised suitability, the length of the flashing element is chosen to be slightly longer than the sum of the gauge (i.e. inter-batten spacing) and the head lap for the longest available slates. In the present embodiment the length of the flashing element is chosen to be equal to the gauge plus the head lap plus 25mm for the longest available slate.

The flashing element **501** has a plurality, in the present example 5, protrusions **503** arranged along a straight line and extending upwards from one of the flashing elements rectangular faces. The protrusions **503** are provided as a guide, or stop, to ensure correct regular placement of the flashing element during installation on a roof. The line of protrusions **503** divides the flashing element **501** into two portions **504** and **505.** The first portion **504** is intended to be located between roofing elements, while the second portion **505** is generally intended to be located beneath a collection device, such as collection devices **104** to **109.**

In the present embodiment, the flashing element has a set of parallel shallow grooves **506** extending parallel to the line of protrusions **503** on the first portion **504.** These grooves **506** are provided as a cutting guide and allow an installer (a roofer) to easily adjust the dimensions of the flashing element on site using hand tools. Should the installer of the flashing element require the flashing element to be narrower, it may be trimmed to size by passing a knife along a selected one of the grooves **506.**

In the present embodiment, the second portion **505** of the flashing element **501** is provided with a series of ridges **507** extending along the length of the flashing element parallel to the line of protrusions **503.** After installation of the roof **102,** it is anticipated that the upper surface shown in *Figures 5* and *6* of the second portion **505** of the flashing element **501** will become wet due to rain. The ridges **507** will extend in lines down the roof and resist seepage of water between the flashing element and the collection device positioned above it, and also between the flashing element and a second flashing element located above it.

The flashing element **501** is moulded from a plastics material, being formed by injection moulding. In the present embodiment the flashing element is formed of polypropylene. However, in alternative embodiments it is formed of another plastics material suitable for outdoor roofing applications, such as polyamide **66.**

The second portion **505** of the flashing element **501** also defines a plurality of grooves extending along the entire length of the flashing device **501** parallel to, and adjacent to, the line of protrusions **503.** Each of the grooves defines a narrow web of material, and as the material of the flashing element has the required properties to allow flexing, the grooves allow the flashing element to be folded, or hinged, along the length of the grooves. Thus each groove defines what is known as a "live hinge" or "living hinge".

In the present embodiment, this plurality of grooves comprises three grooves; a first groove **509** on the opposite side of the flashing element to the protrusions **503,** and second and third grooves **510** and **511** on the same side of the flashing element **501** as the protrusions **503.** In order to be useable with slates having conventional thicknesses the grooves are arranged parallel to each other and the spacing between neighbouring grooves is between 3 and 7 millimetres.

### Figures 10, 11 & 12

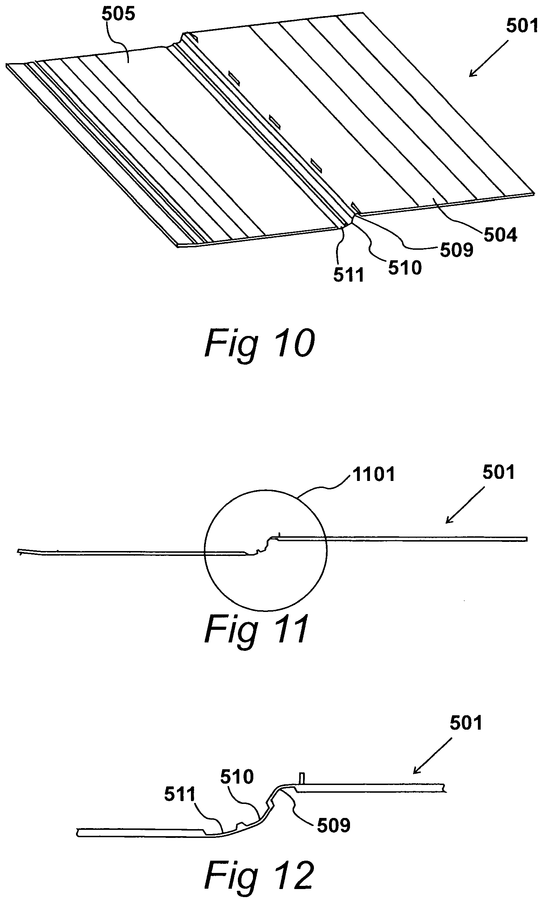

The flashing element **501** is shown having been folded about its live hinges, or grooves **509, 510** and **511,** in the perspective view of *Figure 10* and front view of *Figure 11**.* A portion of the front view indicated by circle **1101** in *Figure 11* is shown in an enlarged partial view in *Figure 12**.*

In use, the first portion **504** is required to be arranged substantially parallel to, at least a major portion of, the second portion **505.** Depending upon the particular location of the flashing element **501** in use, it may be required to be substantially flat, as previously shown in *Figure 5*, or have its first portion **504** and its second portion **505** lying in separate planes. Thus, the grooves **509, 510** and **511** provide a means for allowing the flashing element **501** to be reconfigured as required. In a less preferred embodiment, only two such grooves are provided, but in the present preferred embodiment a third groove is provided to allow the flashing element to be formed into desired configurations that minimise risk of water leakage and increase the aesthetic appearance of the installed roof.

### Figure 13

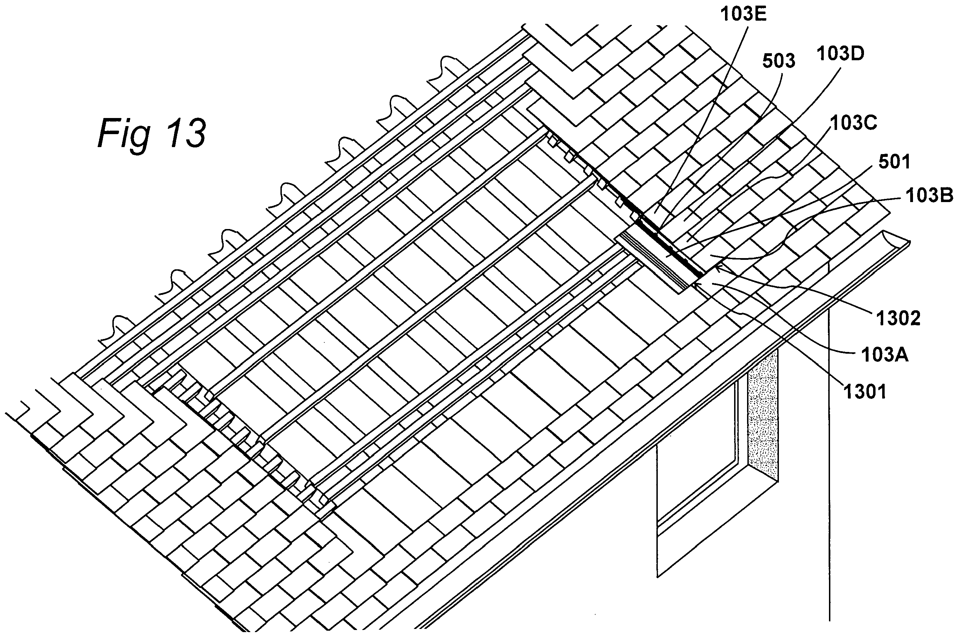

The partial roof assembly previously shown in *Figure 4* is shown again in *Figure 13* after installation of a first flashing element **501.** The first portion **504** of the flashing element **501** has been located directly beneath roofing element **103B** and on the top of the roofing element **103A.** The flashing element **501** has been positioned such that the protrusions **503** are abutting the edges of the roofing elements **103B, 103C, 103D** and **103E.** A lowermost edge **1301** of the flashing element **501** has been positioned such that it is substantially in line with the bottom edge **1302** of roofing element **103B.** As may be seen in *Figure 13*, roofing element **103B** is the lowermost of the roofing elements that have an edge forming a line that extends down the side of the array of collection devices.

### Figures 14 & 15

The partial roof assembly of *Figure 13* is shown again in *Figure 14* after a further three flashing elements **501A**, **501B,** and **501C** have been installed. It should be understood that all flashing elements of the present embodiment are substantially identical to flashing element **501.**

The flashing elements are installed one above another but spaced apart by a roofing element and also with their lowermost edges spaced by the same distance as that separating the lowermost edges of the roofing elements. Thus, the flashing element **501A** has a lowermost edge **1401** aligned with the lowermost edge **1402** of roofing element **103C,** and similarly flashing element **501B** has a lowermost edge **1403** aligned with a lowermost edge **1404** of roofing element **103D,** etc. The flashing elements are located directly beneath the roofing element to which the bottom edges are aligned, for example, flashing element **501A** is located directly beneath roofing element **103C**, while flashing element **501B** is located directly beneath **103D.**

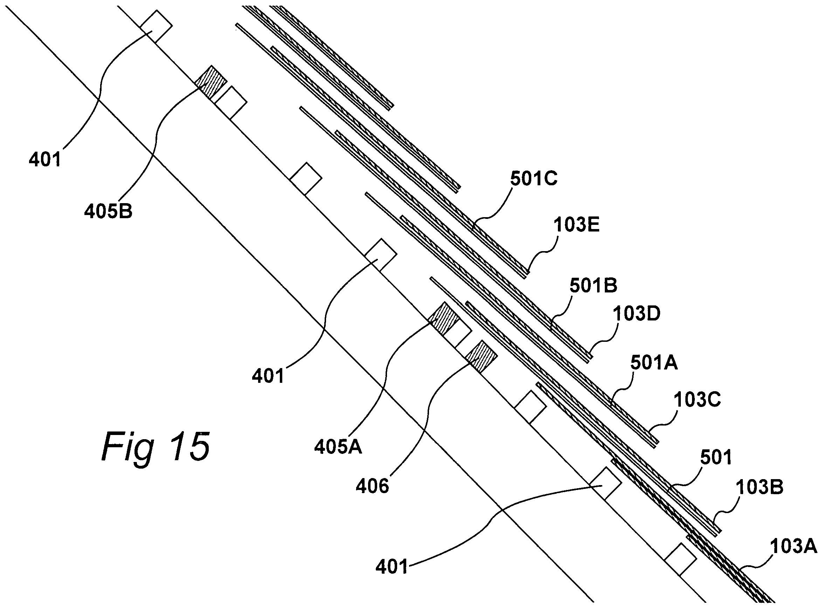

This arrangement of flashing elements between roofing elements is further illustrated in *Figure 15* which shows the order in which the flashing elements and roofing elements are laid onto battens **401.**

### Figure 16

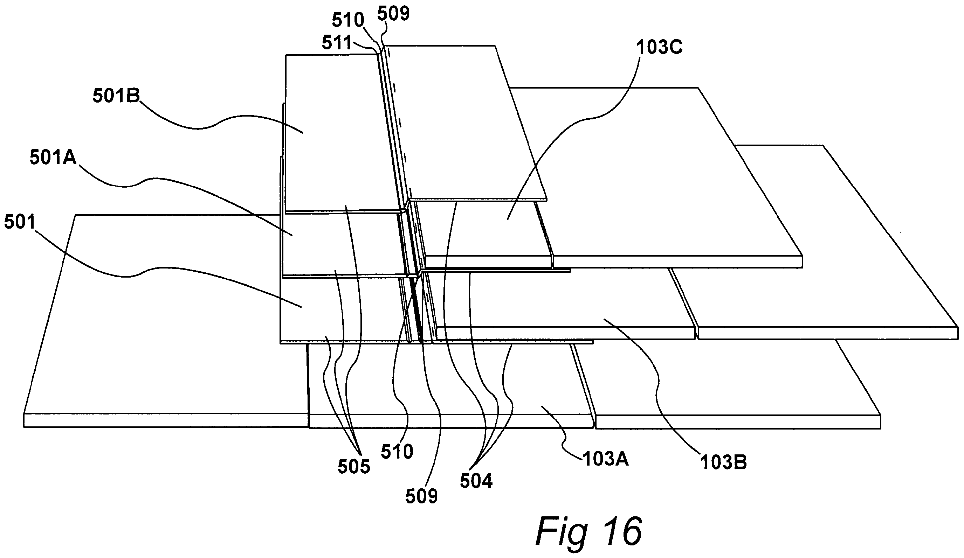

A portion of the roof **102** including roofing elements **103A, 103B** and **103C** along with flashing elements **501, 501A** and **501B** is shown in *Figure 16**.* The thicknesses of the components shown in *Figure **16*** have been exaggerated for the purposes of clarity. In practice, the flashing elements generally have a thickness of less than 1.5 millimetres.

*Figure 16* illustrates the ability of the flashing elements to be reconfigured in dependence of their location in the roof structure. Flashing element **501** is located on top of the roofing element **103A** such that both the first portion **504** and a second portion **505** of the flashing element **501** lays flat against the roofing element **103A**. Thus, the flashing element **501** is configured in its flat configuration previously shown in *Figures 5* and *6*.

In contrast, flashing element **501A** has its first portion **504** lying on top of roofing element **103B** while its second portion **505** rests on the second portion **505** of the first flashing element **501.** This has been achieved by folding the flashing element about its grooves **509** and **510.** Thus, the first portion **504** and the second portion **505** of flashing element **501A** reside in planes that are spaced apart by approximately the thickness of a roofing element.

Flashing element **501B** has its first portion **504** resting upon roofing element **103C** while its second portion **505** rests on top of the second portion **505** of the flashing element **501A.** Consequently, the first portion **504** and second portion **505** of the flashing element **501B** reside in planes that are separated by approximately twice the thickness of a roofing element. This has been achieved by folding the flashing element **501B** about each of its live hinges, or grooves, **509, 510** and **511.**

Thus, generally, the second portions of the flashing elements are brought together by folding along the grooves **509, 510, 511** in the flashing element. However, as will be described below with reference to *Figure 19*, this arrangement is periodically interrupted. For example, the next flashing element **501C** (not shown in *Figure 16*) is not folded to bring its second portion against the second portion of flashing element **501B**.

### Figure 17A

A hooking member **1701** for restraining the front edge of a lowermost collection device in an array is shown in *Figure 17A*. The hooking element comprises a metal plate formed into a hook shape at a first end **1702.** A series of spaced holes **1703** are arranged along a line extending along the hooking member in an end portion **1704** adjacent to its opposite end **1705.**

The hooking member **1701** is provided with a pair of opposing parallel bends **1706** and **1707** extending across its width such that the end portion **1704** resides in a plane that is parallel to, but spaced apart from, a main portion **1708** of the hooking member, which terminates in the hook-shaped end **1702.** The shape of the first hooking member provided by the bends **1706** and **1707** allow the end portion **1704** to be located firmly against a batten during use while the main portion **1708** is able to extend up and over a roofing element mounted on an adjacent batten.

### Figures 17B and 17C

A hook **1711** for restraining the front edge of collection devices in an array is shown in *Figure 17B**.* The hook **1711** comprises a metal plate formed into a hook shape at a first end **1712** and defining a hole **1713** for receiving a screw at a second opposite end **1715.**

The hook **1711** is used to restrain the front edge of a collection device that overlaps the top edge of a lower collection device. To achieve this, the three hooks are fitted to the frame of the lower collection device by means of a screw through the hole **1713** in the hook **1711** and through a respective one of the three predefined holes **220** (identified in *Figure 2**).* A hook **1711** is shown attached to a collection device **(109)** in this way in *Figure 17C**.*

### Figure 18

The partially formed roof **102** previously shown in *Figure 14* is shown again in *Figure 18* with three hooking members **1701** attached to the additional batten **406.** The hooking members are attached to the batten **406** by means of one or more screws each located through a respective one of the holes **1703** in the hooking member **1701.** The hooking members **1701** are arranged such that hooked ends **1702** reside on a line, indicated by dashed line **1801** that extends along the line of the bottom edge **1302** of the lowermost edge tile **103B**.

The positioning of the hooked ends **1702** of the hooking members **1701** is achieved by installing the additional batten **406** such that it extends along a line parallel with the line **1801** and spaced apart from the line **1801** by a distance that is determined by the distance between the hooked end **1702** of the hooking members **1701** and their fixing holes **1703.**

It may be noted that the pair of bends **1706, 1707** of the hooking members **1701** allows the attachment portion **1704** of the hooking members to rest on the batten **406,** while the main portion **1708** of the hooking members rests on the complete row of roofing elements **1810** that extends directly below the space **400** provided in the roof for the collection devices.

*Figure 18* also shows further flashing elements **501** having been fitted to the roof **102.** Consequently, each slate positioned alongside the region **400** to which the collection devices are to be fitted has a flashing element located below it.

It should be noted that the symmetry of the flashing elements **501** allows them to be used after rotation through **180** degrees. Thus, they are usable along a right hand edge **1821** of a region **400** receiving collection devices, and also usable along the left-hand edge **1822** when rotated through **180** degrees.

Flashing elements **501** are also usable to provide a weather-tight interface where a left edge of a collection device abuts a right edge of a collection device. Thus as shown in *Figure **18*** a column **1823** of three flashing elements **501** has been attached to the battens **405** where the two columns of collection devices will meet. It may be noted that only a single flashing element is required for each device-to-device interface and so each of the three battens **405** has a flashing element attached.

### Figure 19

A first one **(109)** of the collection devices is shown in *Figure 19* installed as part of the roof **102.** The collection device **109** rests on the three hooking members **1701** such that the hooked ends **1702** are located about its front edge **209.** A portion of the collection device **109** adjacent to its right edge has been positioned on top of the lowermost three flashing elements **501, 501A** and **501B**. However, the fourth flashing device **501C** has been configured to lay on top of the collection device **109.** Specifically, the flashing element **501C** extends over the attachment portion **203** of collection device **109** but does not extend over the collection portion **202;** if it did, this would block solar energy reaching part of the collection portion and so prevent the collection device **109** from operating correctly. As a general rule, when installing the collection devices (such as **109**), the flashing elements are arranged to be below the collection devices unless, as is the case with flashing element **501C**, a flashing element can be positioned above a collection device without extending over its collection portion.

When the roof **102** has been fully installed, the flashing elements extending down the sides of the collection device form a channel along which rainwater may run. Clearly, as rain falls on the roof, the quantity of water running down the channel will generally tend to increase towards the lowest end of the channel. If the build-up were allowed to go unchecked, the risk of water leaking from the channel into the roof space would be increased towards the lowest end of the channel. Thus, to avoid this build-up of water, the water within the channel is brought to a level above the collection devices by overlapping some of the flashing elements over the collection devices. (Flashing element **501C** overlapping collection device **109** is an example of this arrangement.) This will be further described below with reference to *Figure 22*.

As previously mentioned above with respect to *Figure 2**,* the collection device **109** is secured to the lowermost batten **405C** of the second set of battens **405** by means of screws located through holes **204** in the attachment portion **203** of the collection device **109.**

Three hooks **1711** are attached to the collection device **109** as previously described with respect to *Figure 17C*. Thus, the three hooks are ready to receive, and retain, the front edge of the next collection device **(107)** in the column. It may be noted that hooks **1711** are attached to all collection devices in the array except for the uppermost collection device in any column.

### Figure 20

The roof **102** is shown partially complete in *Figure 20* after installation of collection elements **109, 107** and **105.**

Following installation of collection device **109,** the collection device **107** is positioned on the roof **102** such that its front edge extends over the attachment portion of the collection device **109** and rests within the hooks **1711** fitted to collection device **109.** The attachment portion **203** of collection device **107** is positioned on the second batten **405B** of the second set of battens **405** and secured in place by screws as described for collection device **109.**

The third collection device **105** is then positioned on the roof **102** with its front edge extending over the attachment portion of collection device **107** and located within the hooks **1711** fitted to collection device **107.** The attachment portion **203** of the collection device **105** is secured to the third batten **405C** of the second set of battens **405.**

To complete the installation of the collection devices, a second set of hooking members (**1701** of *Figure 17*) is attached along the lowermost batten **406.** Then the second column of collection devices (**108, 106** and **104**) is installed, in a similar manner as for collection devices **109, 107** and **105.**

### Figure 21

The roof **102** is shown in *Figure 21* after installation of the second column of collection devices, comprising collection devices **108, 106** and **104.**

In the present embodiment, the array of collection devices has a rectangular form, being two collection devices wide and three collection devices long. However, it will be understood that where required, the above-described system of installation of collection devices allows arrays having other shapes to be installed, such as L-shaped arrays or T-shaped arrays.

### Figures 22 and 23

When the collection devices (**104** to **109**) have been fitted, the roof is then completed by fitting slates to the battens **401.** The roof is shown in *Figure 22* after a first row **2201** of slates has been fitted across the upper edge of the array of collection devices.

If necessary, as is the case in the present example, this first row **2201** of slates is cut to length so that they overlap the attachment portions **203** of the uppermost collection devices **104, 105,** but do not overlap the collection portion **202** of these collection devices. Furthermore, if necessary the slates **2202, 2203** adjacent the outer upper corners of the uppermost collection devices **104, 105** are shaped to avoid overlapping of the collection portion but so that the slate is able to partly extend down the side edges of these collection devices.

After fitting this first row **2201** of slates the remaining slates are fitted to the roof in a conventional manner to complete the roof **102,** as shown in *Figure 23*.

### Figure 24

A partial schematic diagram representing the roof **102** is shown in *Figure 24* comprising the flashing elements **501** and **501A** to **501H**, along with collection devices **105, 107** and **109.** This Figure is intended to show the general flow of water down this portion of the roof during wet weather, and the various components have been spaced apart within the diagram to allow the water flows to be illustrated.

As mentioned previously, the flashing elements **501** and **501A** to **501H** form a channel down the side of the collection devices **105, 107** and **109** along which rainwater may run. Thus, water **2401A** running down flashing element **501H** falls on to flashing element **501G** and then on to **501F.** However, the lowermost portion of flashing element **501F** extends over the attachment portion of collection device **107.** Consequently a portion **2401B** of the rainwater falling from flashing element **501F** falls on to the upper surface of the collection device **107,** while a second portion **2401C** falls on to the flashing element **501E**. i.e., it stays in the channel. The water **2401B** that falls on to collection device **107** tends to run down the upper surface of a collection device **107** and on to the upper surface of the lowermost collections device **109** and then on to the roofing elements such as **103A**, below.

Water falling on to flashing element **501E** runs down the channel formed by the flashing element on to flashing element **501D** and on to flashing element **501C**, which extends over the top of the attachment portion of collection device **109.** Consequently, the water is again divided into a first portion **2401D** that runs from the flashing element **501C** onto the upper surface of the collection device **109,** and a second portion **2401E** that remains in the channel, falls onto flashing element **501B** and subsequently runs down onto flashing elements **501A** and **501.**

Thus, the water within the channel formed by the flashing elements is periodically reduced by allowing a portion of the water (such as portions **2401B** and **2401D**) to spill out across the collection devices. As a result, the volume of water running out of the bottom end of the channel is reduced.

## Claims

1. A method of installing a solar energy collection device **(109)** as part of a roof (**101**) that comprises a plurality of roofing elements attached to a plurality of battens **(401),** a plurality of said roofing elements **(103, 103A**, **103B**, **103C**) being edge roofing elements having edges arranged to define a line extending down said roof, said method comprising the steps of:
obtaining a collection device **(109)** for converting solar energy to another form of energy;
obtaining a plurality of flashing elements **(501, 501A**, **501B**) having a plurality of grooves;
positioning said flashing elements so that a first portion of each flashing element is located beneath a respective edge roofing element; and
positioning said collection device alongside said edge roofing elements and over exposed portions of said flashing elements, **characterised in that**:
each said groove defines a living hinge **(506)** extending along a line, and
said step of positioning said flashing elements comprises positioning a first portion of a first flashing element (501) beneath a first one of said edge roofing elements (103B), positioning a first portion of a second flashing element (**501A**) beneath a second one of said edge roofing elements (103C) and on top of said first edge roofing element (103B), and folding said second flashing element **(501A)** about said living hinges of said second flashing element such that an exposed portion **(505)** of said second flashing element is brought to rest on an exposed portion of said first flashing element **(501).**

2. A method of installing a solar energy collection device according to claim 1, wherein said flashing elements are formed of a plastics material.

3. A method of installing a solar energy collection device according to claim 1 or claim 2, wherein said flashing elements each have three grooves to allow folding.

4. A method of installing a solar energy collection device according to any one of claims **1** to **3,** wherein said method comprises obtaining a plurality of collection devices, each having a collection portion for converting solar energy to another form of energy and an attachment portion, and said method comprises attaching said attachment portions to battens such that one of said collection devices overlaps the attachment portion of a second one of said devices.

5. A method of installing a solar energy collection device according to any one of claims **1** to **4,** wherein said method comprises positioning an uppermost portion of one of said flashing elements below a first one of said collection devices and a lowermost portion of that flashing element over an adjacent collection device.

6. A method of installing a solar energy collection device according to any one of claims **1** to **5,** wherein said flashing elements have a length that is at least as long as a length of one of said roofing elements.

7. A method of installing a solar energy collection device according to any one of claims **1** to **6,** wherein said roofing elements are slates.

8. A flashing element **(501)** for use when installing a solar energy collection device as part of a roof in accordance with the method of any one of claims **1** to **7,** wherein said flashing element **(501)** has a first portion **(504),** a second portion **(505)** and a plurality of grooves,
**characterised in that** each said groove defines a living hinge **(506)** extending along a line, said living hinges allowing said flashing element to be folded about said lines such that said first portion **(504)** of said flashing element is locatable beneath a plurality of said edge roofing elements, and said flashing element is foldable about said lines to reposition said second portion before positioning said collection device alongside the edge roofing elements and over said second portion of said flashing element.

9. A flashing element according to claim **8,** wherein said flashing elements are formed of a plastics material.

10. A flashing element according to claim **8** or claim **9,** wherein said flashing elements each have three living hinges to allow folding.

11. A roof **(102)** comprising:
a plurality of flashing elements (**501**, **501A**, **501B**) as claimed in any one of claims **8** to **10**;
a plurality of roofing elements **(103, 103A, 103B, 103C)** including a plurality of said roofing elements which are edge roofing elements having edges arranged to define a line extending down said roof;
a plurality of battens **(401)** having said plurality of roofing elements attached thereto;
a solar energy collection device **(109);** and
wherein: a first portion **(504)** of a first one **(501)** of said flashing elements is positioned beneath a first one of said edge roofing elements (**103B**), a first portion **(504)** of a second one (**501A**) of said flashing elements is positioned beneath a second one of said edge roofing elements **(103C)** and on top of said first edge roofing element **(103B),** and said second flashing element (**501A**) is folded about said lines of said second flashing element such that said second portion **(505)** of said second flashing element (**501A**) rests on the second portion **(505)** of said first flashing element **(501);** and
said collection device is positioned alongside said edge roofing elements and over said second portions of said flashing elements.

12. A roof according to claim **11,** wherein said roof comprises a plurality of collection devices **(104, 105, 106, 107, 108, 109),** each having a collection portion **(202)** for converting solar energy to another form of energy and an attachment portion **(203),** and said attachment portions are attached to battens such that one of said collection devices overlaps the attachment portion of a second one of said collection devices.

13. A roof according to claim **11** or claim **12,** wherein an uppermost portion of one of said flashing elements is positioned below a first one of said collection devices and a lowermost portion of that flashing element is positioned over an adjacent collection device.

14. A roof according to any one of claims **11** to **13,** wherein said flashing elements have a length that is at least as long as a length of one of said roofing elements.

15. A roof according to any one of claims **11** to **14,** wherein said roofing elements are slates.

## Patentansprüche

1. Ein Verfahren zur Installation einer Solarenergie-Sammelvorrichtung **(109)** als Teil eines Daches **(101),** das eine Vielzahl von Dachelementen umfasst, die an einer Vielzahl von Latten **(401)** befestigt sind, wobei eine Vielzahl der Dachelemente **(103, 103A, 103B, 103C)** Randdachelemente sind, deren Kanten so angeordnet sind, dass sie eine Linie definieren, die sich über das Dach erstreckt, wobei das Verfahren die folgenden Schritte umfasst:
Erhalt einer Sammelvorrichtung **(109)** zur Umwandlung von Solarenergie in eine andere Energieform;
Erhalt einer Vielzahl von Anschlusselementen **(501, 501A, 501B)** mit einer Vielzahl von Rillen;
Positionierung der Anschlusselemente, so dass ein erster Abschnitt jedes Anschlusselements unter einem entsprechenden Randdachelement angeordnet ist; und
Positionierung der Sammelvorrichtung entlang der Randdachelemente und über freiliegenden Abschnitten der Anschlusselemente, mit folgender Charakterisierung:
jede der Rillen definiert ein lebendes Scharnier **(506),** das sich entlang einer Linie erstreckt,
und
der Schritt zur Positionierung der Anschlusselemente umfasst das Positionieren eines ersten Abschnitts eines ersten Anschlusselements **(501)** unter einem ersten der Randdachelemente (103B),
Positionieren eines ersten Abschnitts eines zweiten Anschlusselements **(501A)** unter einem zweiten der Randdachelemente (103C)
und oben auf dem ersten Randdachelement (103B)
und Falten des zweiten
Anschlusselements **(501A)** um die lebenden Scharniere des zweiten Anschlusselements herum, so dass ein freiliegender Abschnitt **(505)** des zweiten Anschlusselements auf einem freiliegenden Abschnitt des ersten Anschlusselements **(501)** positioniert wird.

2. Ein Verfahren zur Installation einer Solarenergie-Sammelvorrichtung nach Anspruch 1, wobei die Anschlusselemente aus einem Kunststoff hergestellt sind.

3. Ein Verfahren zur Installation einer Solarenergie-Sammelvorrichtung nach Anspruch 1 oder Anspruch 2, wobei die Anschlusselemente je drei Rillen für die Faltung aufweisen.

4. Ein Verfahren zur Installation einer Solarenergie-Sammelvorrichtung nach einem der Ansprüche **1** bis **3,** wobei das Verfahren den Erhalt einer Vielzahl von Sammelvorrichtungen umfasst, von denen jede einen Sammelabschnitt zum Umwandeln von Solarenergie in eine andere Energieform und einen Befestigungsabschnitt aufweist, und das Verfahren die Befestigung der Befestigungsabschnitte an Latten umfasst, sodass eine der Sammelvorrichtungen den Befestigungsabschnitt einer zweiten der Vorrichtungen überlappt.

5. Ein Verfahren zur Installation einer Solarenergie-Sammelvorrichtung nach einem der Ansprüche **1** bis **4,** wobei das Verfahren die Positionierung des obersten Abschnitts eines der Anschlusselemente unterhalb der ersten der Sammelvorrichtungen und des untersten Abschnitts dieses Anschlusselements über einer benachbarten Sammelvorrichtung umfasst.

6. Ein Verfahren zur Installation einer Solarenergie-Sammelvorrichtung nach einem der Ansprüche **1** bis **5,** wobei die Anschlusselemente eine Länge aufweisen, die mindestens so lang ist wie eine Länge eines der Dachelemente.

7. Ein Verfahren zur Installation einer Solarenergie-Sammelvorrichtung nach einem der Ansprüche **1** bis **6,** wobei die Dachelemente Schieferplatten sind.

8. Ein Anschlusselement **(501)** zur Verwendung bei der Installation einer Solarenergie-Sammelvorrichtung als Teil eines Daches nach dem Verfahren eines der Ansprüche **1** bis **7,** wobei das Anschlusselement **(501)** einen ersten Abschnitt **(504),** einen zweiten Abschnitt **(505)** und eine Vielzahl von Rillen aufweist,
die **dadurch gekennzeichnet sind, dass** jede der Rillen ein lebendes Scharnier **(506)** definiert, das sich entlang einer Linie erstreckt, wobei die lebenden Scharniere es ermöglichen, dass das Anschlusselement um die Linien so gefaltet wird, dass der erste Abschnitt **(504)** des Anschlusselements unter einer Vielzahl der Randdachelemente angeordnet werden kann, und das Anschlusselement um die Linien gefaltet werden kann, um den zweiten Abschnitt neu zu positionieren, bevor die Sammelvorrichtung neben den Randdachelementen und über dem zweiten Abschnitt des Anschlusselements positioniert wird.

9. Ein Anschlusselement nach Anspruch **8,** wobei die Anschlusselemente aus einem Kunststoff hergestellt sind.

10. Ein Anschlusselement nach Anspruch **8** oder Anspruch **9,** wobei die Anschlusselemente je drei lebende Scharniere für die Faltung aufweisen.

11. Ein Dach **(102),** umfassend:
eine Vielzahl von Anschlusselementen **(501, 501A, 501B),** wie in einem der Ansprüche **8** bis **10** gefordert;
eine Vielzahl von Dachelementen **(103, 103A, 103B, 103C),** die eine Vielzahl der Dachelemente beinhalten, die Randdachelemente mit Kanten sind, die in einer Weise angeordnet sind, um eine Linie zu definieren, die sich über das Dach erstreckt;
eine Vielzahl von Latten **(401),** an denen die Vielzahl von Dachelementen befestigt ist;
eine Solarenergie-Sammelvorrichtung **(109);** und
wobei: ein erster Abschnitt **(504)** des ersten **(501)** der Anschlusselemente unter einem ersten der Randdachelemente **(103B)** positioniert ist, ein erster Abschnitt **(504)** eines zweiten **(501A)** der Anschlusselemente unter einem zweiten der Randdachelemente **(103C)** und auf dem ersten Randdachelement **(103B)** positioniert ist, und das zweite Anschlusselement **(501A)** um die Linien des zweiten Anschlusselements so gefaltet ist, dass der zweite Abschnitt **(505)** des zweiten Anschlusselements **(501A)** auf dem zweiten Abschnitt **(505)** des ersten Anschlusselements **(501)** aufliegt; und
die Sammelvorrichtung entlang der Randdachelemente und über den zweiten Abschnitten der Anschlusselemente positioniert ist.

12. Ein Dach nach Anspruch **11,** wobei das Dach eine Vielzahl von Sammelvorrichtungen **(104, 105, 106, 107, 108, 109)** umfasst, die jeweils einen Sammelabschnitt **(202)** zur Umwandlung von Solarenergie in eine andere Energieform und einen Befestigungsabschnitt **(203)** aufweisen, und die Befestigungsabschnitte an Latten befestigt sind, sodass eine der Sammelvorrichtungen den Befestigungsabschnitt einer zweiten der Sammelvorrichtungen überlappt.

13. Ein Dach nach Anspruch **11** oder Anspruch **12,** wobei der oberste Abschnitt eines der Anschlusselemente unterhalb einer der ersten Sammelvorrichtungen und der unterste Abschnitt dieses Anschlusselements über einer benachbarten Sammelvorrichtung angeordnet ist.

14. Ein Dach nach einem der Ansprüche **11** bis **13,** wobei die Anschlusselemente eine Länge aufweisen, die mindestens so lang ist wie eine Länge eines der Dachelemente.

15. Ein Dach nach einem der Ansprüche **11** bis **14,** wobei die Dachelemente Schieferplatten sind.

## Revendications

1. Méthode d'installation d'un dispositif de captage d'énergie solaire **(109)** faisant partie d'un toit **(101)** comprenant une pluralité d'éléments de toiture fixés sur une pluralité de lattes **(401),** une pluralité desdits éléments de toiture **(103, 103A, 103B, 103C)** étant des éléments de bordure de toiture dont les bords sont agencés de façon à définir une ligne descendant le long dudit toit, ladite méthode comprenant les étapes suivantes :
obtention d'un dispositif de captage **(109)** pour la conversion d'énergie solaire dans une autre forme d'énergie ;
obtention d'une pluralité d'éléments de solin **(501, 501A, 501B)** possédant une pluralité de rainures ;
positionnement desdits éléments de solin de sorte qu'une première partie de chaque élément de solin se situe sous un élément de bordure de toiture correspondant ; et
positionnement dudit dispositif de captage le long desdits éléments de bordure de toiture et sur des parties exposées desdits éléments de solin, **caractérisée en ce que** :
chacune desdites rainures définit une charnière active **(506)** s'étendant le long d'une ligne, et
ladite étape de positionnement desdits éléments de solin comprend le positionnement d'une première partie d'un premier élément de solin **(501)** sous un premier élément desdits éléments de bordure de toiture (103B), le positionnement d'une première partie d'un deuxième élément de solin **(501A)** sous un deuxième desdits éléments de bordure de toiture (103C) et au-dessus dudit premier élément de bordure de toiture (103B), et le pliage dudit deuxième élément de solin **(501A)** autour desdites charnières actives dudit deuxième élément de solin de sorte qu'une partie exposée **(505)** dudit deuxième élément de solin vienne se poser sur une partie exposée dudit premier élément de solin **(501).**

2. Méthode d'installation d'un dispositif de captage d'énergie solaire selon la revendication **1,** lesdits éléments de solin étant réalisés en matière plastique.

3. Méthode d'installation d'un dispositif de captage d'énergie solaire selon la revendication **1** ou la revendication **2,** lesdits éléments de solin possédant chacun trois rainures pour permettre le pliage.

4. Méthode d'installation d'un dispositif de captage d'énergie solaire selon une quelconque des revendications **1** à **3,** ladite méthode comprenant l'obtention d'une pluralité de dispositifs de captage, possédant chacun une partie de captage pour convertir l'énergie solaire dans une autre forme d'énergie, et une partie de fixation, et ladite méthode comprenant la fixation desdites parties de fixation sur des lattes, de sorte qu'un desdits dispositifs de captage chevauche la partie de fixation d'un deuxième desdits dispositifs.

5. Méthode d'installation d'un dispositif de captage d'énergie solaire selon une quelconque des revendications **1** à **4,** ladite méthode comprenant le positionnement d'une partie supérieure d'un desdits éléments de solin sous un premier desdits dispositifs de captage, et d'une partie inférieure de cet élément de solin sur un dispositif de captage adjacent.

6. Méthode d'installation d'un dispositif de captage d'énergie solaire selon une quelconque des revendications **1** à **5,** la longueur desdits éléments de solin étant au moins égale à celle d'un desdits éléments de toiture.

7. Méthode d'installation d'un dispositif de captage d'énergie solaire selon une quelconque des revendications **1** à **6,** lesdits éléments de toiture étant des ardoises.

8. Élément de solin **(501)** utilisé dans l'installation d'un dispositif de captage d'énergie solaire dans le cadre d'un toit, selon la méthode d'une quelconque des revendications **1** à **7,** ledit élément de solin **(501)** présentant une première partie **(504),** une deuxième partie **(505)** et une pluralité de rainures,
**caractérisé en ce que** chacune desdites rainures définit une charnière active **(506)** s'étendant le long d'une ligne, lesdites charnières actives permettant de plier ledit élément de solin sur lesdites lignes de sorte que ladite première partie **(504)** dudit élément de solin puisse se placer sous une pluralité desdits éléments de bordure de toiture, et ledit élément de solin pouvant être plié sur lesdites lignes pour repositionner ladite deuxième partie avant de positionner ledit dispositif de captage le long des éléments de bordure de toiture et au-dessus de ladite deuxième partie dudit élément de solin.

9. Élément de solin selon la revendication **8,** lesdits éléments de solin étant réalisés en matière plastique.

10. Élément de solin selon la revendication **8** ou la revendication **9,** lesdits éléments de solin possédant chacun trois charnières actives pour permettre le pliage.

11. Toit **(102)** comprenant :
une pluralité d'éléments de solin **(501, 501A, 501B)** selon une quelconque des revendications **8** à **10** ;
une pluralité d'éléments de toiture **(103, 103A, 103B, 103C),** y compris une pluralité desdits éléments de toiture qui sont des éléments de bordure de toiture dont les bords sont agencés de façon à définir une ligne descendant le long dudit toit ;
une pluralité de lattes **(401)** sur laquelle est fixée ladite pluralité d'éléments de toiture ;
un dispositif de captage d'énergie solaire **(109)** ; et
une première partie **(504)** d'un premier **(501)** desdits éléments de solin étant positionnée sous un premier desdits éléments de bordure de toiture **(103B),** une première partie **(504)** d'un deuxième **(501A)** desdits éléments de solin étant positionnée sous un deuxième desdits éléments de bordure de toiture **(103C)** et au-dessus dudit premier élément de bordure de toiture **(103B),** et ledit deuxième élément de solin **(501A)** étant plié le long desdites lignes dudit deuxième élément de solin de sorte que ladite deuxième partie **(505)** dudit deuxième élément de solin **(501A)** se pose contre la deuxième partie **(505)** dudit premier élément de solin **(501)** ; et
ledit dispositif de captage étant positionné le long desdits éléments de bordure de toiture et au-dessus desdites deuxièmes parties desdits éléments de solin.

12. Toit selon la revendication **11,** ledit toit comprenant une pluralité de dispositifs de captage **(104, 105, 106, 107, 108, 109)** possédant chacun une partie de captage **(202)** pour convertir l'énergie solaire en une autre forme d'énergie et une partie de fixation **(203),** et lesdites parties de fixation étant fixées sur des lattes de sorte qu'un desdits dispositifs de captage chevauche la partie de fixation d'un deuxième desdits dispositifs de captage.

13. Toit selon la revendication **11** ou la revendication **12,** une partie supérieure d'un desdits éléments de solin étant positionnée sous un premier desdits dispositifs de captage et une partie inférieure de cet élément de solin étant positionnée sur un dispositif de captage adjacent.

14. Toit selon une quelconque des revendications **11** à **13,** la longueur desdits éléments de solin étant au moins égale à la longueur d'un desdits éléments de toiture.

15. Toit selon une quelconque des revendications **11** à **14,** lesdits éléments de toiture étant des ardoises.
